# EUROPEAN PATENT APPLICATION

(11) **EP 1 302 605 A2**
(43) Date of publication of application: **16.04.2003**
(21) Application number: 02022965.4
(22) Date of filing: 14.10.2002
(51) Int. Cl.: E04C 3/29

(54) **Reinforced metallic member**

(30) Priority: 15.10.2001 JP 2001316315; 15.10.2001 JP 2001316316; 15.10.2001 JP 2001316317; 15.10.2001 JP 2001316318
(71) Applicant: Ube Industries, Ltd., Ube-Shi, Yamaguchi 755-8633 (JP)
(72) Inventor: Nakamura, Ken, Ube Chemical Factory, Ube-shi, Yamaguchi 755-8633 (JP); Okamura, Shigekazu, Ube Chemical Factory, Ube-shi, Yamaguchi 755-8633 (JP); Fujii, Masahiro, Ube-shi, Yamaguchi 755-8633 (JP)
(74) Representative: Grünecker, Kinkeldey, Stockmair & Schwanhäusser Anwaltssozietät

(57) **Abstract**

A reinforced structure of a metallic member is described, in which a metallic member having an opening on at least one face thereof is reinforced with a resin member, deformation of the opening being inhibited by reinforcing means of (1) closing the opening with the resin member to form a rectangular closed cross-section, or (2) providing a reinforcing rib as a resin member in the inside of the opening and fixing a joint section integrally molded with the rib to the metallic member by a channel provided in the joint section or through engagement.

## Description

### FIELD OF THE INVENTION

The present invention relates to a reinforced structure of a metallic member, in which an opening of a metallic member having a channel, lip channel or hat shape is reinforced with a resin member; a reinforced structure of a metallic member, in which an opening of a metallic member having a channel, lip channel or hat shape is reinforced with a reinforcing rib as a resin member; a reinforced structure of a metallic member, in which a metallic member having an angle shape is reinforced by forming a rectangular closed cross-section using a resin member having an angle shape; and a reinforced structure of a metallic member, in which a metallic member having an angle shape is reinforced with a reinforcing rib as a resin member. These reinforced structures are applied to structural members of, for example, vehicles members and business machines.

### BACKGROUND OF THE INVENTION

Hitherto, metallic members have been used for structural members of, for example, vehicle parts and business machines. As such metallic members are usually used metallic members having a channel, lip channel or hat shape, or an angle shape in order to achieve weight reduction. However, in the metallic members having such a shape, the rigidity of an opening is low because of the shape thereof, and in particular, in a part where the strength is required, the opening is deformed by a load. Accordingly, a metallic member having a rectangular closed cross-section was used, or a reinforcing rib as a metallic member was provided in the inside of the opening, thereby increasing the rigidity. For this reason, there was involved a problem such that an increase in the production cost or an increase in the weight is inevitably introduced due to an increases in the production steps including welding.

On the other hand, there has been an attempt to achieve weight reduction by using a resin member in place of the metallic member. However, the resin member is lower in the strength, and in particular, smaller in the rigidity than the metallic member. Accordingly, the resin material involved a problem such that it cannot be used in a part where the strength is required.

In this regard, JP-A-2-199400 has proposed a lightweight structural element in which a reinforcing rib as a resin member is provided in the inside of a metallic member having an opening on one face thereof. According to the proposed structure, a through hole is provided in the metallic member, and a resin is subjected to insert molding, whereby the metallic member and the reinforcing rib as a resin member are connected to each other. For this reason, there is involved a problem such that because of molding shrinkage or a difference in coefficient of linear expansion, a high residual stress remains between the metal and the resin, resulting in lowering in the quality or reliability of products. In addition, there are other problems that production facilities for the insert molding are necessary and that the cycle time becomes long due to heat resistance between the insert metal and the mold.

### SUMMARY OF THE INVENTION

An object of the invention is to overcome the above-described problems of the related art and to provide a reinforced structure of a metallic member having an improved rigidity without bringing an increase in the weight and an increase in the production cost, in which an opening of a metallic member having a channel, lip channel or hat shape is reinforced with a resin member that can be prepared in an easy outsert process, or with a reinforcing rib as a resin member that can be prepared in an easy outsert process; alternatively, a metallic member having an angle shape is reinforced by forming a rectangular closed cross-section using a resin member having an angle shape, that can be prepared in an easy outsert process, or with a reinforcing rib as a resin member having an angle shape, that can be prepared in an easy outsert process.

In order to achieve the above-described object, we, the present inventors made extensive and intensive investigations. As a result, it has been found that a sufficient improvement in rigidity can be achieved by reinforcing means of (1) closing an opening of a metallic member having an opening on at least one face thereof, with a resin material to form a rectangular closed cross-section, or (2) providing a reinforcing rib as a resin member in the inside of an opening of a metallic member having an opening on at least one face thereof and fixing a joint section integrally molded with the rib to the metallic member by providing a channel in the joint section, or through engagement, thereby inhibiting deformation of the opening, nevertheless the resin member having a lower rigidity than the metallic member is used, leading to accomplishment of a first invention.

Specifically, the first invention is concerned with a reinforced structure of a metallic member, in which a metallic member having an opening on at least one face thereof is reinforced with a resin member, deformation of the opening being inhibited by reinforcing means of (1) closing the opening with the resin member to form a rectangular closed cross-section, or (2) providing a reinforcing rib as a resin member in the inside of the opening and fixing a joint section integrally molded with the rib to the metallic member by a channel provided in the joint section or through engagement.

Also, the present inventors have found that a sufficient improvement in rigidity can be achieved by providing a lid as a resin member over an opening of a metallic member having a channel, lip channel or hat shape to form a closed cross-section, nevertheless the resin member having a lower rigidity than the metallic member is used, leading to accomplishment of a second invention.

Specifically, the second invention is concerned with a reinforced structure of a metallic member, in which a lid as a resin member is provided over an opening of a metallic member having a channel, lip channel or hat shape to form a closed cross-section, thereby inhibiting deformation of the opening.

Also, the present inventors have found that a sufficient improvement in rigidity can be achieved by providing a reinforcing rib as a resin member in the inside of an opening of a metallic member having a channel, lip channel or hat shape, nevertheless the resin member having a lower rigidity than the metallic member is used, leading to accomplishment of third and fourth inventions.

Specifically, the third invention is concerned with a reinforced structure of a metallic member, in which a reinforcing rib as a resin member is provided in the inside of an opening of a metallic member having a channel, lip channel or hat shape, and a channel is provided in a joint section integrally molded with the rib to fix an end face of the opening to the resin member, thereby inhibiting deformation of the opening.

Also, the fourth invention is concerned with a reinforced structure of a metallic member, in which a reinforcing rib as a resin member is provided in the inside of an opening of a metallic member having a channel, lip channel or hat shape, and a joint section integrally molded with the rib is fixed to the metallic member through engagement, thereby inhibiting deformation of the opening.

Also, the present inventors have found that a sufficient improvement in rigidity can be achieved by reinforcing a metallic member having an angle shape with a resin member having an angle shape to form a rectangular closed cross-section, nevertheless the resin member having a lower rigidity than the metallic member is used, leading to accomplishment of a fifth invention.

Specifically, the fifth invention is concerned with a reinforced structure of a metallic member, in which a metallic member having an angle shape is reinforced with a resin member having an angle shape to form a rectangular closed cross-section, thereby inhibiting deformation of the metallic member.

In addition, the present inventors have found that a sufficient improvement in rigidity can be achieved by providing a reinforcing rib as a resin member in the inside of a metallic member having an angle shape, nevertheless the resin member having a lower rigidity than the metallic member is used, leading to accomplishment of sixth and seventh inventions.

Specifically, the sixth invention is concerned with a reinforced structure of a metallic member, in which a reinforcing rib as a resin member is provided in the inside of a metallic member having an angle shape, and a joint section integrally molded with the rib is fixed to the metallic member through engagement, thereby inhibiting deformation of the metallic member.

Also, the seventh invention is concerned with a reinforced structure of a metallic member, in which a reinforcing rib as a resin member is provided in the inside of a metallic member having an angle shape, and a channel is provided in a joint section integrally molded with the rib to fix an end face of the metallic member to the resin member, thereby inhibiting deformation of the metallic member.

### BRIEF DESCRIPTION OF THE DRAWINGS

Fig. 1 is a view to show the shape of a metallic member in the invention.

Fig. 2A and Fig. 2B are each a view to show one example of the fixing method by a channel in a reinforced structure of a metallic member according to the invention.

Fig. 3 is a view to show another example of the fixing method by a channel in a reinforced structure of a metallic member according to the invention.

Fig. 4 is a view to show one example of the fixing method through engagement in a reinforced structure of a metallic member according to the invention.

Fig. 5 is a view to show other example of the fixing method by a channel in a reinforced structure of a metallic member according to the invention.

Fig. 6 is a view to show another example of the fixing method through engagement in a reinforced structure of a metallic member according to the invention.

Fig. 7 is a view to show the shape of a metallic member in the invention.

Fig. 8 is a view to show other example of the fixing method by a channel in a reinforced structure of a metallic member according to the invention.

Fig. 9 is a view to show other example of the fixing method through engagement in a reinforced structure of a metallic member according to the invention.

Fig. 10 is a view to show other example of the fixing method in a reinforced structure of a metallic member according to the invention.

Fig. 11 is a view to show one example wherein a reinforcing rib is provided in the inside of a resin member in a reinforced structure of a metallic member according to the invention.

Fig. 12 is a view to show other example of the fixing method through engagement in a reinforced structure of a metallic member according to the invention.

Fig. 13 is a view to show other example of the fixing method by a channel in a reinforced structure of a metallic member according to the invention.

### DETAILED DESCRIPTION OF THE INVENTION

The invention will be described hereunder in detail.

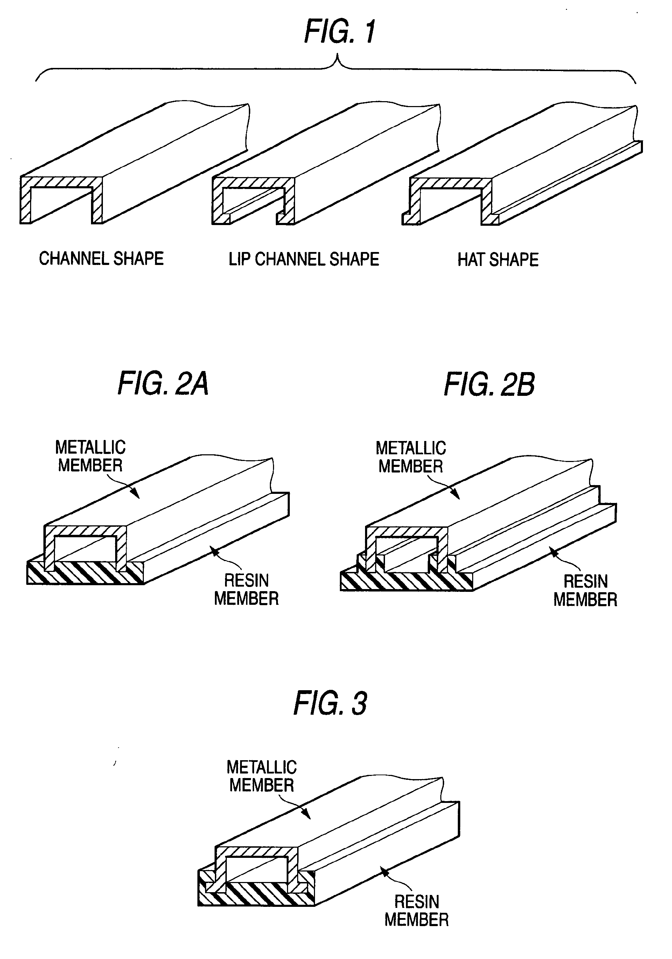

Examples of the metallic member that can be used in the first to fourth inventions include steel plates, aluminum plates and other metallic material plates. As the metallic member are used those having a channel, lip channel or hat shape as shown in Fig. 1 in at least a part thereof. Incidentally, the shape of the metallic member used in the invention is not limited strictly to the shapes as described above, but shapes similar to these shapes may be employed.

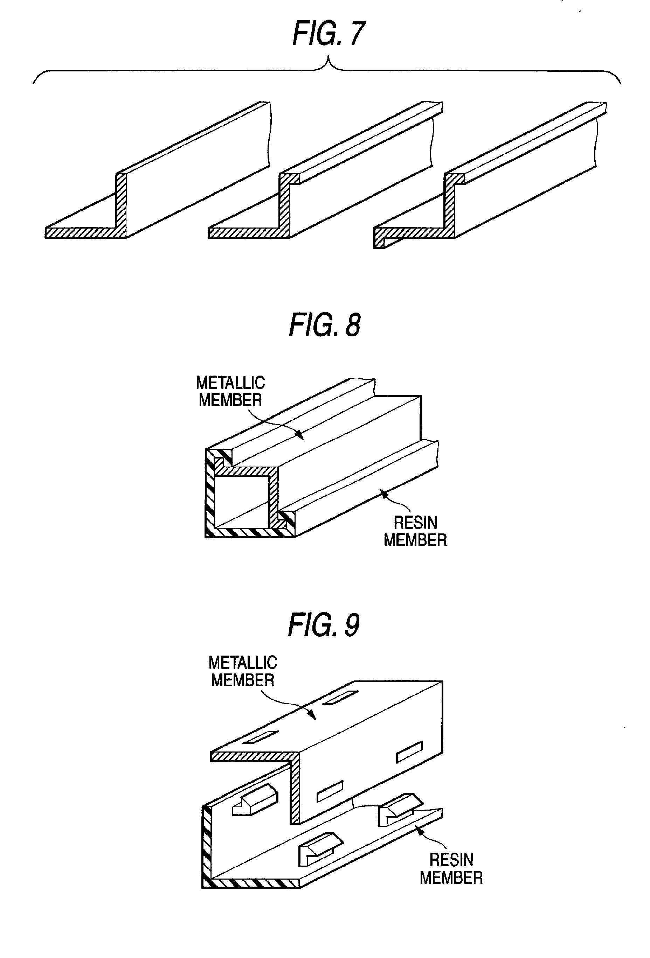

Examples of the metallic member that can be used in the first and fifth to seventh inventions include steel plates, aluminum plates and other metallic material plates. As the metallic member are used those having an angle shape as shown in Fig. 7 in at least a part thereof. Incidentally, the shape of the metallic member used in the invention is not limited strictly to the shape as described above, but shapes similar to this shape may be employed.

The resin member that is used in the invention is not particularly limited. Examples include polyamide resins, polyacetal resins, polycarbonate resins, polyether resins, polyester resins, polypropylenes, and ABS resins. These resins may be used singly, or alloys comprising a mixture of two or more thereof may be used. As the single resin are preferable polyamide resins and polypropylenes.

Specific examples of the polyamide resins include aliphatic polyamides such as nylon 6, nylon 66, nylon 11, and nylon 12, and hemi-aromatic polyamide resins such as polyhexamethylene terephthalamide and polyhexamethylene isophthalamide. These resins may be used singly, or may be made of a copolymer of two or more thereof. Further, those reinforced with, for example, glass fibers or carbon fibers may be used. Preferably, the polyamide resins are nylon 6 and nylon 66, and more preferably glass fiber-reinforced nylon 6.

According to the second invention, a rigidity defect to be brought by the matter that the metallic member having a channel, lip channel or hat shape has an opening can be efficiently compensated by providing a lid as a resin member over the opening to form a closed cross-section, thereby inhibiting deformation of the opening. Moreover, by using the resin member having a low specific gravity, weight reduction and an improvement in the strength can be simultaneously achieved.

Concretely, nevertheless the resin member that is lower in both of the rigidity and the strength (about 1/4) than metals is used, it has been confirmed that the buckling strength and torsional rigidity of the metallic member increase by 10 % or more and 15 % or more, respectively by this method.

As a method for fixing the metallic member to the resin member, there is employed a method in which an end face of the opening is fixed to the resin member by providing a channel in the resin member. Concretely, in the case of a metallic member having a channel shape, there are employed a method in which the whole of the end face of the opening is fixed to the resin member by providing a channel in the resin member, as shown in Fig. 2A; and a method in which a part of the end face of the opening is fixed to the resin member by providing channel-provided protrusions in the resin member, as shown in Fig. 2B. Further, in the case of a metallic member having a lip channel or hat shape, there is employed a method in which a return section of the end face of the opening is fixed to the resin member by providing a channel in the resin member, as shown in Fig. 3.

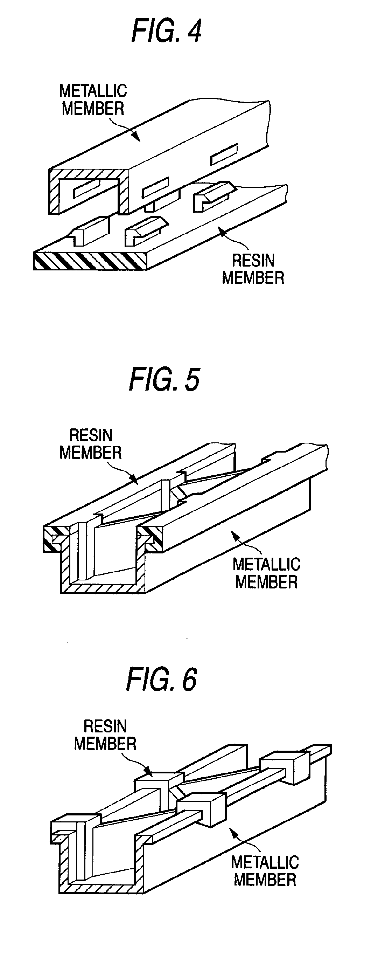

In addition, there is a method in which the metallic member is fixed to the resin member through engagement. Concretely, there is employed a method in which apertures for engagement are provided on side faces of the opening of the metallic member, with which are then engaged protrusions for engagement, as provided in the resin member, as shown in Fig. 4.

In the second invention, the above-described fixing methods can be used in combination.

In addition, according to the invention, the reinforcing effect can be enhanced by providing a reinforcing rib integrally molded with the resin member in the inside of the opening.

According to the third and fourth inventions, a rigidity defect to be brought by the matter that the metallic member having a channel, lip channel or hat shape has an opening can be efficiently compensated by providing a reinforcing rib as a resin member in the inside of the opening, thereby inhibiting deformation of the opening. Moreover, by using the resin member having a low specific gravity, weight reduction and an improvement in the strength can be simultaneously achieved.

Concretely, nevertheless the resin member that is lower in both of the rigidity and the strength (about 1/4) than metals is used, it has been confirmed that the buckling strength and torsional rigidity of the metallic member increase by 10 % or more and 15 % or more, respectively by this method.

As a method for fixing the metallic member to the resin member, there is employed a method in which an end face of the opening is fixed to the resin member by providing a channel in a joint section integrally molded with the reinforcing rib as a resin member. Concretely, there is employed a method in which a return section of the end face of the opening is fixed to the resin member by providing a channel in the resin member, as shown in Fig. 5.

In addition, there is a method in which the metallic member is fixed to the resin member through engagement. Concretely, there is employed a method in which apertures for engagement are provided on side faces of the opening of the metallic member, with which are then engaged protrusions for engagement, as provided in the joint section integrally molded with the reinforcing rib as a resin member, as shown in Fig. 6.

In the third and fourth inventions, the above-described fixing methods can be used in combination.

According to the fifth invention, a rigidity defect to be brought by the metallic member having an angle shape can be efficiently compensated by forming a rectangular closed cross-section using a resin member having an angle shape, thereby inhibiting deformation of the metallic member. Moreover, by using the resin member having a low specific gravity, weight reduction and an improvement in the strength can be simultaneously achieved.

Concretely, nevertheless the resin member that is lower in both of the rigidity and the strength (about 1/4) than metals is used, it has been confirmed that the buckling strength and torsional rigidity of the metallic member increase by 20 % or more and 20 % or more, respectively by this method.

As a method for fixing the metallic member to the resin member, there is employed a method in which the metallic member is fixed to the resin member by providing a channel in the metallic member or the resin member. Concretely, there is employed a method in which a return section of the end face of the metallic member is fixed to the resin member by providing a channel in the resin member, as shown in Fig. 8.

In addition, there is a method in which the metallic member is fixed to the resin member through engagement. Concretely, there is employed a method in which apertures for engagement are provided on side faces of the metallic member, with which are then engaged protrusions for engagement, as provided in the resin member, as shown in Fig. 9.

Moreover, there is employed a method in which the metallic member is fixed to the resin member by a joint member such as a screw and a rivet.

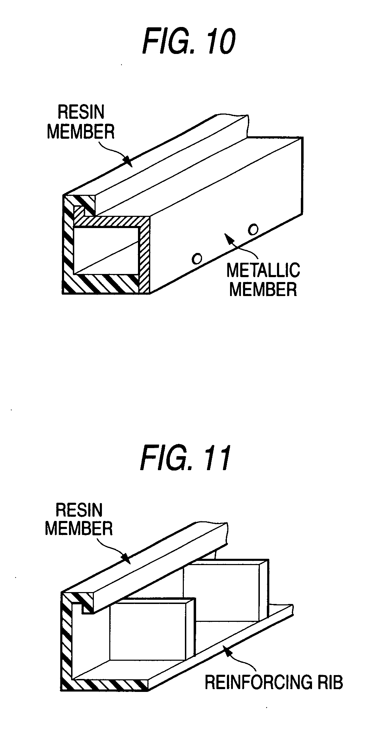

In the fifth invention, the above-described fixing methods can be used in combination. Concretely, a return section on one end face of the metallic member is fixed to the resin member by providing a channel in the resin member, and the other side face of the metallic member is fixed to the resin member by a joint member, as shown in Fig. 10.

In addition, according to the invention, the reinforcing effect can be enhanced by providing a reinforcing rib integrally molded with the resin member in the inside of the resin member having an angle shape, as shown in Fig. 11.

According to the sixth and seventh inventions, a rigidity defect to be brought by the metallic member having an angle shape can be efficiently compensated by providing a reinforcing rib as a resin member, thereby inhibiting deformation of the metallic member. Moreover, by using the resin member having a low specific gravity, weight reduction and an improvement in the strength can be simultaneously achieved.

Concretely, nevertheless the resin member that is lower in both of the rigidity and the strength (about 1/4) than metals is used, it has been confirmed that the buckling strength and torsional rigidity of the metallic member increase by 20 % or more and 15 % or more, respectively by this method.

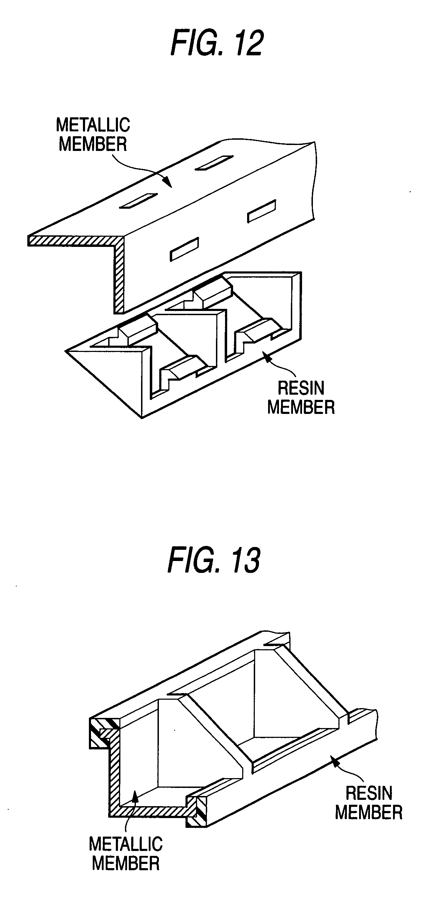

As a method for fixing the metallic member to the resin member, there is employed a method in which a joint section integrally molded with a reinforcing rib as a resin member is fixed to the metallic member through engagement. Concretely, there is employed a method in which apertures for engagement are provided on side faces of the metallic member, with which are then engaged protrusions for engagement, as provided in the joint section, as shown in Fig. 12.

In addition, there is a method in which an end face of the metallic member is fixed to the resin member by providing a channel in the joint section. Concretely, there is employed a method in which a return section on the end face of the metallic member is fixed to the joint section by providing a channel in the joint section, as shown in Fig. 13.

In the six and seventh inventions, the above-described fixing methods can be used in combination.

The reinforced structure of a metallic member with a resin member according to the invention can be produced in an easy outsert process. Accordingly, it is possible to provide easily a reinforced structure, without necessity for using an insert molding process requiring special production facilities, increasing the molding time and resulting in lowering in quality and reliability of products.

The reinforced structure of a metallic member according to the invention is applied to structural members required to have a high strength and rigidity, such as supporting sections of automobile doors and bumpers, automobile front and rear parts, door sills, supporting frames of business machines, and decorative parts.

According to the invention, it is possible to provide a reinforced structure of a metallic member having an improved rigidity without bringing an increase in the weight and an increase in the production cost, in which an opening of a metallic member having a channel, lip channel or hat shape is reinforced with a resin member that can be prepared in an easy outsert process, or with a reinforcing rib as a resin member that can be prepared in an easy outsert process; alternatively, a metallic member having an angle shape is reinforced by forming a rectangular closed cross-section using a resin member having an angle shape, that can be prepared in an easy outsert process, or with a reinforcing rib as a resin member having an angle shape, that can be prepared in an easy outsert process.

While the invention has been described in detail and with reference to specific embodiments thereof, it will be apparent to one skilled in the art that various changes and modifications can be made therein without departing from the spirit and scope thereof.

## Claims

1. A reinforced structure of a metallic member, in which a metallic member having an opening on at least one face thereof is reinforced with a resin member, deformation of the opening being inhibited by reinforcing means of (1) closing the opening with the resin member to form a rectangular closed cross-section, or (2) providing a reinforcing rib as a resin member in the inside of the opening and fixing a joint section integrally molded with the rib to the metallic member by a channel provided in the joint section or through engagement.

2. A reinforced structure of a metallic member, in which a lid as a resin member is provided over an opening of a metallic member having a channel, lip channel or hat shape to form a closed cross-section, thereby inhibiting deformation of the opening.

3. The reinforced structure of a metallic member according to claim 2, wherein an end face of the opening is fixed to the resin member by providing a channel in the resin member.

4. The reinforced structure of a metallic member according to claim 2, wherein the metallic member is fixed to the resin member through engagement.

5. The reinforced structure of a metallic member according to claim 2, wherein a reinforcing rib integrally molded with the resin member is provided in the inside of the opening.

6. A reinforced structure of a metallic member, in which a reinforcing rib as a resin member is provided in the inside of an opening of a metallic member having a channel, lip channel or hat shape, and a channel is provided in a joint section integrally molded with the rib to fix an end face of the opening to the resin member, thereby inhibiting deformation of the opening.

7. A reinforced structure of a metallic member, in which a reinforcing rib as a resin member is provided in the inside of an opening of a metallic member having a channel, lip channel or hat shape, and a joint section integrally molded with the rib is fixed to the metallic member through engagement, thereby inhibiting deformation of the opening.

8. A reinforced structure of a metallic member, in which a metallic member having an angle shape is reinforced with a resin member having an angle shape to form a rectangular closed cross-section, thereby inhibiting deformation of the metallic member.

9. The reinforced structure of a metallic member according to claim 8, wherein the metallic member is fixed to the resin material by a channel provided in the metallic member or the resin member, through engagement, or by a joint member.

10. The reinforced structure of a metallic member according to claim 8, wherein a reinforcing rib integrally molded with the resin member is provided in the inside of the resin member having an angle shape.

11. A reinforced structure of a metallic member, in which a reinforcing rib as a resin member is provided in the inside of a metallic member having an angle shape, and a joint section integrally molded with the rib is fixed to the metallic member through engagement, thereby inhibiting deformation of the metallic member.

12. A reinforced structure of a metallic member, in which a reinforcing rib as a resin member is provided in the inside of a metallic member having an angle shape, and a channel is provided in a joint section integrally molded with the rib to fix an end face of the metallic member to the resin member, thereby inhibiting deformation of the metallic member.
